# EUROPEAN PATENT SPECIFICATION

(11) **EP 2 751 239 B1**
(45) Date of publication and mention of the grant of the patent: **01.05.2019**
(21) Application number: 12756862.4
(22) Date of filing: 23.08.2012
(51) Int. Cl.: C11D 1/88, C11D 3/39, C11D 3/04, C11D 3/24, A01N 59/08, A01N 41/08, C11D 1/94, C11D 3/28, C11D 3/30, C11D 3/32, C11D 3/48

(54) **MULTI-PART KIT SYSTEM FOR THE PREPARATION OF A DISINFECTANT**
MEHRTEILIGES KIT-SYSTEM ZUR HERSTELLUNG EINES DESINFEKTIONSMITTELS
SYSTÈME MULTI-COMPOSANTS POUR PRÉPARATION DE DÉSINFECTANT

(30) Priority: 29.08.2011 US 201161528465 P
(43) Date of publication of application: 09.07.2014
(73) Proprietor: Lanxess Corporation, Pittsburgh, PA 15275-1112 (US)
(72) Inventor: SQUIRE, Mark, Wallace, Newmarket Suffolk CB8 8ER (GB); CHALONER, Catherine Mary, Sudbury Suffolk CO10 2DA (GB); HICKS, Sharon Elizabeth, Sudbury Suffolk CO10 2DR (GB); BOARD, Kelly Ann, Sudbury Suffolk CO10 2EU (GB); PABON, Martial Jean-Jacques, F 01280 Prevessin (FR)
(74) Representative: Herbold, Matthias
(86) International application number: PCT/US2012/051969
(87) International publication number: WO 2013/032830

(56) References cited:
- WO-A1-00/49127
- GB-A- 932 750
- GB-A- 2 187 098

## Description

### FIELD OF THE INVENTION

The invention relates to a multi-part kit system for the preparation of a disinfectant and the use thereof in a process for the preparation of a disinfectant.

### BACKGROUND OF THE INVENTION

WO 2008/043638 A1 discloses aqueous liquid cleaning compositions comprising a bleaching composition and an activator composition. The bleaching composition comprises KHSO₅, an ammonium based thickening surfactant system and an inorganic acid, whereas the activator composition comprises a water-soluble inorganic halide like NaCl and a thickening polymer. The ammonium based thickening surfactant system comprises a tertiary amine surfactant in combination with amine oxide surfactant and/or quaternary ammonium salt surfactant.

GB-A-2 187 098 discloses dry water-soluble biocidal compositions comprising less than 5wt% inorganic halide, alkali metal phosphate,strong oxidising agent (such as potassium persulphate), sulphamic acid, and a non-reducing organic acid.

There is still a need in the market for other effective, shelf stable disinfectant systems, particularly multi-part kit systems which resist unwanted precipitate formation in use.

### SUMMARY OF THE INVENTION

The present invention provides an easy-to-use multi-part kit system for the preparation of an efficient disinfectant comprising a combination of a peroxy biocide and a co-biocide of the substituted ammonium type, a process for the preparation of the disinfectant making use of the multi-part kit system, and the disinfectant itself. The disinfectant itself made by mixing the parts of the multi-part kit system and water is distinguished by a considerable stability in terms of only slow loss of peroxidic oxygen (active oxygen) and a low or even negligible tendency to develop unwanted precipitate.

Accordingly, the present invention provides a multi-part kit system comprising (i) a solid part A which comprises 10 to 80 wt.% (weight-%) of at least one peroxy compound selected from the group consisting of KHSO₅, K₂S₂O₈, Na₂S₂O₈, magnesium monoperoxyphthalate hexahydrate, sodium percarbonate and sodium perborate, 0.1 to 10 wt.% of at least one MCI compound and 1 to 20 wt.% of at least one H₂N(CH₂)ₙSO₃H compound with n = 0, 1, 2 or 3 with the proviso that the amount of taurine H₂N(CH₂)₂SO₃H is 1 to 20wt%, and (ii) a liquid part B in the form of an aqueous solution which comprises 0 to 20 wt.% of nonionic surfactant, 3.6 to 20 wt.% of amphoteric surfactant and 0.5 to 20 wt.% of at least one compound comprising substituted ammonium selected from the group consisting of dihydrocarbyl dimethylammonium halides, didecyl methyl-poly(oxyethyl) ammonium propionate, chlorhexidine gluconate, cetylpyridinium halide and polyhexamethylene biguanide hydrochloride, wherein M is selected from the group consisting of lithium, sodium and potassium, wherein at least one of the two hydrocarbyl residues, each of which can vary independently, comprises 8 to 18 carbon atoms, and wherein halide means chloride or bromide.

In a preferred embodiment, the present invention provides a two-part kit system consisting of said solid part A and said liquid part B.

### DETAILED DESCRIPTION OF THE INVENTION

The term "multi-part kit system" or "two-part kit system" is used in the description and the claims. It means a kit system comprised of several or two parts which are stored separate from each other until being used; i.e., until the parts are mixed to form the disinfectant.

In referring to the components of a particular part of a multi-part kit, unless otherwise indicated, the weight % of the component is based on the total weight of that particular part. For example, the wt. % of the components of Part A is based on the total weight of Part A and so forth for the other parts.

The term "solid part A" is used in the description and the claims. It refers to the fact that part A of the multi-part kit system of the present invention is a solid. The components forming part A may comprise components which are not solid but may be pasty or liquid, for example; however, it is preferred that all components forming part A are solids. The solid part A may be in the form of a flowable powder or it may take the form of pellets or tablets, for example. The solid nature of part A allows for its easy dosing when mixing with the liquid part B and water in order to prepare the disinfectant which is an aqueous solution.

The solid part A of the multi-part kit system of the present invention comprises 10 to 80 wt.%, preferably 18 to 43 wt.%, and particularly 26 to 41 wt.% of at least one peroxy compound selected from the group consisting of KHSO₅, K₂S₂O₈, Na₂S₂O₈, magnesium monoperoxyphthalate hexahydrate, sodium percarbonate and sodium perborate.

KHSO₅ is not commercially available as a pure compound but in the form of a triple salt with the formula 2KHSO₅·KHSO₄·K₂SO₄, for example, from DuPont as DuPont™ Oxone® monopersulfate compound; therefore, in case the solid part A contains KHSO₅, the latter is typically contained as said triple salt and, as a consequence, is accompanied by the respective amount of KHSO₄ and K₂SO₄.

In a preferred embodiment, the solid part A comprises KHSO₅ and preferably no other peroxy compound. The KHSO₅ may then be contained in the solid part A in a proportion of 10 to 80 wt.%, preferably of 18 to 43 wt.%, and particularly of 26 to 41 wt.%, or, more precisely, the KHSO₅ may then be contained in the solid part A as 2KHSO₅·KHSO₄·K₂SO₄ in a proportion of 20 to 98.9 wt.%, preferably of 36 to 87 wt.%, and particularly of 53 to 82 wt.%.

The solid part A of the multi-part kit system of the present invention comprises 0.1 to 10 wt.%, preferably 0.2 to 2.6 wt.% and particularly 0.4 to 1.7 wt.% of at least one MCI compound, wherein M is selected from the group consisting of lithium, sodium and potassium. In a preferred embodiment, the solid part A comprises NaCl and preferably no other MCl compound.

The solid part A of the multi-part kit system of the present invention comprises 1 to 20 wt.%, preferably 3 to 20 wt.% and particularly 5 to 18 wt.% of at least one H₂N(CH₂)ₙSO₃H compound with n being 0, 1, 2 or 3, with the proviso that the amount of taurine H₂N(CH₂)₂SO₃H is 1 to 20wt%, preferably 3 to 20wt%, and particularly 5 to 18wt%. In a preferred embodiment, the solid part A comprises H₂N(CH₂)₂SO₃H and no other H₂N(CH₂)ₙSO₃H compound.

In addition to the at least one peroxy compound, the at least one MCI compound and the at least one H₂N(CH₂)ₙSO₃H compound, the solid part A may comprise one or more further additives in a total proportion of, for example, up to 80 wt.%, preferably in the range of 5 to 50 wt.% and particularly in the range of 10 to 33 wt.%. Examples of such further additives that may be contained in the solid part A include solid water-soluble inorganic fillers, for example, sodium sulphate, sodium carbonate, sodium bicarbonate, sodium acetate, potassium sulphate, potassium carbonate, potassium bicarbonate; solid pH-modifiers, for example, malic acid, citric acid, succinic acid, adipic acid, maleic acid, tartaric acid; dyes; and peroxide decomposition stabilizers such as transition metal sequestering (complexing, chelating) agents. Examples of transition metal sequestering agents comprise compounds having nitrogen and/or oxygen donors as ligands, such as dimethylglyoxime, triazacycloalkane compounds, especially 1,4,7-triazacyclononanes (TACNs) or dipyridylamine (DPA); carboxylic acid derivatives such as ethylenediamine-N,N,N',N'-tetraacetic acid (EDTA) and its alkali salts, diethylenetriamine-N,N,N',N',N"-pentaacetic acid (DTPA) and its alkali salts, nitrilo-2,2',2"-triacetic acid (NTA) and its alkali salts; phosphonic acid derivatives such as 1,2-diaminocyclohexyl tetra(methylene phosphonic acid) and its alkali salts, diethylene triamine penta(methylene phosphonic acid) and its alkali salts, ethylene diamine tetra(methylene phosphonic acid) and its alkali salts, polyphosphate compounds and their alkali salts.

In a preferred embodiment, the solid part A of the two-part or multi part kit system of the present invention has a composition as follows:
36 to 87 wt.% of the triple salt 2KHSO₅·KHSO₄·K₂SO₄;
0.2 to 2.6 wt.% of NaCl;
3 to 20 wt.% of H₂N(CH₂)₂SO₃H; and
5 to 50 wt.% of one or more further additives selected from the group consisting of solid water-soluble inorganic fillers, solid pH-modifiers, dyes and peroxide decomposition stabilizers, wherein the sum of the wt.% totals 100 wt.%.

In a particular embodiment, the solid part A of the two-part or multi part kit system of the present invention has a composition as follows:
53 to 82 wt.% of the triple salt 2KHSO₅·KHSO₄·K₂SO₄;
0.4 to 1.7 wt.% of NaCl;
5 to 18 wt.% of H₂N(CH₂)₂SO₃H; and
10 to 33 wt.% of one or more further additives selected from the group consisting of solid water-soluble inorganic fillers, solid pH-modifiers, dyes and peroxide decomposition stabilizers, wherein the sum of the wt.% totals 100 wt.%.

The solid part A may be prepared by mixing, in particular powder blending, all the required constituents. Apart from mixing operations the preparation of solid part A may also include grinding and/or compacting operations such as, for example, pelletizing and/or tableting operations.

The liquid part B of the multi-part kit system of the present invention is an aqueous solution comprising 0 to 20 wt.% of nonionic surfactant, 3.6 to 20 wt.% of amphoteric surfactant and 0.5 to 20 wt.% of at least one compound comprising substituted ammonium selected from the group consisting of dihydrocarbyl dimethylammonium halides with at least one of the two hydrocarbyl residues, each of which can vary independently, having 8 to 18 carbon atoms, didecyl methyl-poly(oxyethyl) ammonium propionate, chlorhexidine gluconate, cetylpyridinium halide and polyhexamethylene biguanide hydrochloride, wherein halide means chloride or bromide.

The phrase "compound comprising substituted ammonium selected from the group consisting of dihydrocarbyl dimethylammonium halides with at least one of the two hydrocarbyl residues having 8 to 18 carbon atoms, didecyl methyl-poly(oxyethyl) ammonium propionate, chlorhexidine gluconate, cetylpyridinium halide and polyhexamethylene biguanide hydrochloride, wherein halide means chloride or bromide" is used in the present description and the claims. For brevity, it is also herein named "compound comprising substituted ammonium".

The liquid part B of the multi-part kit system of the present invention comprises 25 to 95.9 wt.%, preferably 57 to 84 wt.%, and particularly 62 to 80 wt.% of water.

The liquid part B of the multi-part kit system of the present invention comprises 0 to 20 wt.%, preferably 1 to 14 wt.%, and particularly 2 to 10 wt.% of one or more nonionic surfactants. Nonionic surfactants are in particular ones comprising at least one polyoxyethylene and/or polyoxypropylene and/or polyoxyethylene/oxypropylene moiety. Preferred examples of such nonionic surfactants include polyethoxylated alcohols, in particular, polyethoxylated fatty alcohols. Examples of commercially available nonionic surfactants that can be used in part B include Genapol T-250 from Clariant, Rovol T500 from White Sea and Baltic Company Ltd, and Lutensol® AT 50 from BASF.

The commercially available nonionic surfactants may not be pure active substance and they may contain water and/or organic solvents and/or other auxiliary substances; however, the corresponding wt.% specifications made in the description and the claims refer to active substance; i.e., nonionic surfactant as such.

The liquid part B of the multi-part kit system of the present invention comprises 3.6 to 20 wt.%, preferably 6 to 20 wt.%, and particularly 8 to 20 wt.% of one or more amphoteric surfactants. Examples of amphoteric surfactants include betaine-, glycinate-, aminopropionate-, amphoacetate- and imidazoline-based amphoterics, in particular, betaine-based amphoterics. Examples of commercially available amphoteric surfactants that can be used in part B include Ampholak® YCE and Ampholak® XCE both from Akzo Nobel, Amphoteric® SC from Tomah, Mackam® 2CY from Mclntyre Group and Mirataine® D40 from Rhone-Poulenc.

The commercially available amphoteric surfactants may not be pure active substance and they may contain water and/or organic solvents and/or other auxiliary substances; however, the corresponding wt.% specifications made in the description and the claims refer to active substance; i.e., amphoteric surfactant as such.

The liquid part B of the multi-part kit system of the present invention comprises 0.5 to 20 wt.%, preferably 2 to 18 wt.%, and particularly 4 to 14 wt.% of at least one compound comprising substituted ammonium as a co-biocide. The at least one compound comprising substituted ammonium is selected from the group consisting of dihydrocarbyl dimethylammonium halides with at least one of the two hydrocarbyl residues having 8 to 18 carbon atoms, didecyl methyl-poly(oxyethyl) ammonium propionate, chlorhexidine gluconate, cetylpyridinium halide and polyhexamethylene biguanide hydrochloride, wherein halide means chloride or bromide. To avoid misunderstandings, the term "dihydrocarbyl dimethylammonium halide with at least one of the two hydrocarbyl residues having 8 to 18 carbon atoms" used herein shall not be understood to exclude compounds of the C8- to C18-hydrocarbyl trimethylammonium halide type; rather, said term shall be understood to include C8- to C18-hydrocarbyl trimethylammonium halides. Examples of dihydrocarbyl dimethylammonium halides which can be used include didecyldimethylammonium chloride and di(hydrogenated tallow)dimethyl ammonium chloride. Benzalkonium chlorides of the formula C₆H₅CH₂(CH₃)₂(CₙH₂ₙ₊₁)N⁺Cl⁻ with n = 8, 10, 12, 14, 16 or 18 are preferred examples of useful dihydrocarbyl dimethylammonium halides.

Examples of commercially available compounds comprising substituted ammonium that can be used in the liquid part B include Barquat® CB50/80, Barquat® CT35, Barquat® DM50/80, Barquat® LB50, Barquat® MB50/80, Barquat® MS100, Barquat® BB50 and Bardac® 22, Bardac® 2240, Bardac® 2270, Bardac® 2270E from Lonza; Arquad® 16-29, Arquad® 16-50, Arquad® 2.10-80, Arquad® 2HT-75, Arquad® 2HT-75E, Arquad® 2HT-75PG, Arquad® MCB-50, Arquad® MCB-80, Arquad® MCB-80(S) from Akzo Nobel Surfactants; Ammonyx® CETAC, BTC® series, Stepanquat® series from Stepan; and Empigen® BAC series from Huntsman. The commercially available compounds comprising substituted ammonium may not be pure active substance and they may contain water and/or organic solvents and/or other auxiliary substances; however, the corresponding wt.% specifications made in the description and the claims refer to active substance; i.e., compound comprising substituted ammonium as such.

In a preferred embodiment, the liquid part B comprises one or more dihydrocarbyl dimethylammonium chlorides with at least one of the two hydrocarbyl residues having 8 to 18 carbon atoms and preferably none of the following compounds: didecyl methyl-poly(oxyethyl) ammonium propionate, chlorhexidine gluconate, cetylpyridinium chloride, cetylpyridinium bromide and polyhexamethylene biguanide hydrochloride. In a particular embodiment of said preferred embodiment, the one or more dihydrocarbyl dimethylammonium chlorides with at least one of the two hydrocarbyl residues having 8 to 18 carbon atoms are selected from the group consisting of didecyldimethylammonium chloride and benzalkonium chlorides of the formula C₆H₅CH₂(CH₃)₂(CₙH₂ₙ₊₁)N⁺Cl⁻ with n = 8, 10, 12, 14, 16 or 18.

In addition to water, nonionic surfactant, amphoteric surfactant and the at least one compound comprising substituted ammonium the liquid part B may comprise one or more further additives in a total proportion of, for example, up to 10 wt.%, preferably in the range of 1 to 6 wt.%. Examples of further additives that may be contained in the liquid part B include MCI compounds, hard water sequestrants, corrosion inhibitors, water-soluble solvents like alcohols or glycols, and, in particular, peroxide decomposition stabilizers.

In a preferred embodiment, the liquid part B of the two-part or multi part kit system of the present invention has a composition as follows:
57 to 84 wt.% of water;
1 to 14 wt.% of nonionic surfactant;
6 to 20 wt.% of amphoteric surfactant;
2 to 18 wt.% of at least one compound selected from the group consisting of didecyldimethylammonium chloride and benzalkonium chlorides of the formula C₆H₅CH₂(CH₃)₂(CₙH2ₙ₊₁)N⁺Cl⁻ with n = 8, 10, 12, 14, 16 or 18; and
1 to 6 wt.% of one or more further additives selected from the group consisting of MCI compounds; hard water sequestrants; corrosion inhibitors; water-soluble solvents and peroxide decomposition stabilizers, wherein the sum of the wt.% totals 100 wt.%.

In a particular embodiment, the liquid part B of the two-part or multi part kit system of the present invention has a composition as follows:
62 to 80 wt.% of water;
2 to 10 wt.% of nonionic surfactant;
8 to 20 wt.% of amphoteric surfactant;
4 to 14 wt.% of at least one compound selected from the group consisting of didecyldimethylammonium chloride and benzalkonium chlorides of the formula C₆H₅CH₂(CH₃)₂(CₙH₂ₙ₊₁)N⁺Cl⁻ with n = 8, 10, 12, 14, 16 or 18; and
1 to 6 wt.% of one or more further additives selected from the group consisting of MCI compounds; hard water sequestrants; corrosion inhibitors; water-soluble solvents and peroxide decomposition stabilizers, wherein the sum of the wt.% totals 100 wt.%.

It is preferred that none of the following substances is contained in any part of the multi-part kit system of the present invention: inorganic acids other than H₂NSO₃H, tertiary amines, amine oxides, thickeners, compounds comprising metals other than alkali metals and alkaline earth metals.

Preferred multi-part kit systems of the present invention comprise (i) a solid part A composed according to its preferred embodiment and (ii) a liquid part B also composed according to its preferred embodiment.

Preferred two-part kit systems of the present invention consist of (i) a solid part A composed according to its preferred embodiment and (ii) a liquid part B also composed according to its preferred embodiment.

Particularly preferred multi-part kit systems of the present invention comprise (i) a solid part A composed according to its particular embodiment and (ii) a liquid part B composed according to its particular embodiment.

Particularly preferred two-part kit systems of the present invention consist of (i) a solid part A composed according to its particular embodiment and (ii) a liquid part B composed according to its particular embodiment.

It is preferred that parts A and B of the two- or multi-part kit system of the present invention are such, i.e. composition and packaging sizes of parts A and B are preferably such, that upon mixing with each other (and water) the weight ratio between the at least one peroxy compound and the at least one compound comprising substituted ammonium is 4 : 1 to 23 : 1.

The two- or multi-part kit system of the present invention; i.e., in particular, the solid part A and the liquid part B, can be shipped to the user where the individual parts can be stored separate from each other until being used for the preparation of the disinfectant. Both parts A and B have a long shelf life of, for example, 18 to 24 months and more, if stored in a dry and cool place, for example, not exceeding 25°C.

The present invention is also directed to a process for the preparation of a RTU disinfectant (ready-to-use disinfectant) by mixing all parts of the multi-part kit system, in particular, by mixing parts A and B of the preferred two-part kit system, and water in a ratio which ensures (i) a weight ratio between the at least one peroxy compound and the at least one compound comprising substituted ammonium of 4 : 1 to 23 : 1 and (ii) a total content of 0.07 to 1.5 wt.% of the at least one peroxy compound plus the at least one compound comprising substituted ammonium in the RTU disinfectant. Mixing of parts A and B and water results in formation of an aqueous solution.

The process of the present invention can be performed at a user's premises. It is preferred that the multi or two-part kit system of the present invention is supplied to the user in the form of separate receptacles, one of which contains the solid part A and another receptacle or, the other receptacle, contains the liquid part B.

The preparation of the RTU disinfectant can easily be performed by mixing parts A and B and water in the desired mixing ratio, for example, mixing parts A and B and water and, if necessary, diluting the aqueous mixture with water to the desired concentration.

Parts A and B may be mixed into water to obtain a RTU disinfectant with a desired concentration i.e., with a total content of the at least one peroxy compound plus the at least one compound comprising substituted ammonium of 0.07 to 1.5 wt.%. It will be appreciated that concentration may depend on the specific disinfection task to be performed.

Alternatively, parts A and B may be mixed together with a small amount of water to form a concentrate. Such concentrate may be diluted with water to form a RTU disinfectant with the desired concentration, i.e. with a total content of the at least one peroxy compound plus the at least one compound comprising substituted ammonium of 0.07 to 1.5 wt.%. Such RTU disinfectant can then be used for disinfection purposes. For example, the concentrate may be applied by proportioning equipment, which dilutes the concentrate to the required concentration. Examples of such proportioning equipment include chemical injectors and Dosatron® technologies.

Pure, deionized or distilled water may be used for mixing and dilution purposes. However, it is also possible to use tap water or well water, but in such case, it is recommended that at least one of parts A and B comprises a peroxide decomposition stabilizer, in particular, a transition metal sequestering agent.

The disinfectant prepared according to the process described hereinabove is reliably effective against a large number of germs, in particular, pathogenic germs including bacteria, viruses, spores, yeasts, fungi and algae. It may be used for different disinfecting purposes, for example, in the food, milk, brewing or beverage industry; in the medical or surgery sector; in sanitary hygiene; and in farming, for example, swine or poultry breeding, dairy farming and in laying batteries. It may be used in the disinfection of water-circulating systems, but in particular, is used by applying to surfaces for surface disinfection applications, for example, the disinfection of installations; equipment; pipework; containers; bottles; sanitary objects; work surfaces; walls; floors; ceilings or complete rooms or buildings; shoes and protective clothing of staff; transportation vehicles, especially the wheels thereof. For the purposes of surface disinfection the disinfectant may be applied by various application methods which are selected dependent on the kind of surface which is to be disinfected. Application methods include fogging (wherein fogging includes spraying and atomization), wiping, brushing, dipping and rinsing to name only the most common methods. In certain cases the application of the disinfectant may be followed by a water-rinse after the disinfectant has taken effect; however, generally this is not the case.

As already mentioned herein above, depending on the specific disinfection task to be performed, the degree of dilution of the RTU disinfectant will be selected at the lower, the upper or between the lower and the upper end of the concentration range of 0.07 to 1.5 wt.% for the total content of the at least one peroxy compound plus the at least one compound comprising substituted ammonium.

For routine disinfection, for example, the final RTU disinfectant will typically have a total content of 0.1 to 0.6 wt.% of the at least one peroxy compound plus the at least one compound comprising substituted ammonium. Such RTU disinfectant may be applied to a surface, for example, at a rate of 300 mL/m² of surface area by conventional means, for example, using a knapsack sprayer or a pressure washer set.

For equipment disinfection, for example, the final RTU disinfectant will typically have a total content of 0.1 to 0.6 wt.% of the at least one peroxy compound plus the at least one compound comprising substituted ammonium. The equipment to be disinfected may be immersed in the RTU disinfectant and may or may not be rinsed after removal.

For disinfection tasks in a farm environment, for example, the final RTU disinfectant will typically have a total content of 0.1 to 0.6 wt.% of the at least one peroxy compound plus the at least one compound comprising substituted ammonium. Examples of typical applications in a farm environment include vehicle washing, foot- and wheel-dips and surface disinfection, in particular walls, floors and ceilings of animal houses.

For fogging disinfection, for example, the final RTU disinfectant will typically have a total content of 0.1 to 1.5 wt.% of the at least one peroxy compound plus the at least one compound comprising substituted ammonium. Such RTU disinfectant may be applied by conventional means, for example, using a thermal fogging machine at a rate of, for example, 2 to 15 mL/m³.

### EXAMPLES

Identity and vendor of commercial materials used in the examples.

Barquat® DM50 is a 50% solution of alkyl dimethyl benzyl ammonium chloride in water from Lonza.

Oxone® is pentapotassium bis(peroxymonosulfate)bis(sulfate) (86-96%), dipotassium peroxodisulfate (0-5%), and tetra[carbonato(2-)]dihydroxypentamagnesium (1-2%) from DuPont.

Mirataine® D40 is a 36-40% solution of (carboxylatomethyl)dimethyltetradecylammonium and (carboxylatomethyl)dodecyldimethylammonium in water from Rhodia.

Rovol® T500 is alcohol C16-C18 ethoxylate from The White Sea and Baltic Company Ltd.

Amphoteric® SC is a proprietary blend of amphoteric surfactant (35%) and water (65%) from Tomah Products, Inc.

Genapol® T250 is fatty alcohol polyglycol ether from Clariant.

Bardac® 22 is a 50-52% solution of N,N-Didecyl-N,N-dimethylammoniumchloride in water (26.5-30.5%) and isopropanol (19.5-24.5%) from Lonza.

Ammonyx® LO is a solution of lauramine oxide (29-32%) in water (67-70%) from Stepan.
Example 1. A two-part kit was made according to the following recipe.

| Two-Part Kit 1 | | | |
|---|---|---|---|
| Part A | Weight (g) | Part B | Weight (g) |
| Oxone® | 5.0 | Barquat® DM50 | 0.94 |
| Malic acid | 0.94 | Mirataine® D40 | 2.0 |
| Sodium sulphate | 0.503 | Rovol® T500 | 0.3 |
| Taurine (2-amino-ethanesulfonic acid) | 0.700 | Ethylene diamine tetra(methylene phosphonic acid) | 0.2 |
| Sodium chloride | 0.063 | Water | 2.556 |
| Total | 7.206 | Total | 5.996 |

Example 2. A two-part kit was made according to the following recipe. (Not illustrative of the claimed invention)

| Two-Part Kit 2 | | | |
|---|---|---|---|
| Part A | Weight (g) | Part B | Weight (g) |
| Oxone® | 5.0 | Barquat® DM50 | 0.94 |
| Malic acid | 0.94 | Mirataine® D40 | 2 |
| Sodium sulphate | 1.103 | Rovol®T500 | 0.3 |
| Sulphamic acid | 0.10 | Ethylene diamine tetra(methylene phosphonic acid) | 0.2 |
| Sodium chloride | 0.063 | Water | 2.556 |
| Total | 7.206 | Total | 5.996 |

Example 3. A two-part kit was made according to the following recipe.

| Two-Part Kit 3 | | | |
|---|---|---|---|
| Part A | Weight (g) | Part B | Weight (g) |
| Sodium percarbonate (Na₂CO₃ • 1.5 H₂O₂) | 2.52 | Barquat® DM50 | 0.94 |
| Malic acid | 0.94 | Mirataine® D40 | 2.0 |
| Sodium sulphate | 2.983 | Rovol® T500 | 0.3 |
| Taurine | 0.7 | Ethylene diamine tetra(methylene phosphonic acid) | 0.2 |
| Sodium chloride | 0.063 | Water | 2.556 |
| Total | 7.206 | Total | 5.996 |

Example 4. A two-part kit was made according to the following recipe.

| Two-Part Kit 4 | | | |
|---|---|---|---|
| Part A | Weight (g) | Part B | Weight (g) |
| Oxone® | 5.0 | Barquat® DM50 | 0.94 |
| Malic acid | 0.94 | Amphoteric® SC | 2.2 |
| Sodium sulphate | 0.503 | Rovol® T500 | 0.3 |
| Taurine | 0.7 | Ethylene diamine tetra(methylene phosphonic acid) | 0.2 |
| Sodium chloride | 0.063 | Water | 2.358 |
| Total | 7.206 | Total | 5.998 |

Example 5. A two-part kit was made according to the following recipe.

| Two-Part Kit 5 | | | |
|---|---|---|---|
| Part A | Weight (g) | Part B | Weight (g) |
| Oxone® | 5.0 | Barquat® DM50 | 0.94 |
| Malic acid | 0.94 | Mirataine® D40 | 2.0 |
| Sodium sulphate | 0.503 | Genapol® T250 | 0.3 |
| Taurine | 0.7 | Ethylene diamine tetra(methylene phosphonic acid) | 0.2 |
| Sodium chloride | 0.063 | Water | 2.562 |
| Total | 7.206 | Total | 6.002 |

Example 6. A two-part kit was made according to the following recipe.

| Two-Part Kit 6 | | | |
|---|---|---|---|
| Part A | Weight (g) | Part B | Weight (g) |
| Oxone® | 5.0 | Bardac® 22 | 0.94 |
| Malic acid | 0.94 | Mirataine® D40 | 2.0 |
| Sodium sulphate | 0.503 | Rovol® T500 | 0.3 |
| Taurine | 0.7 | Ethylene diamine tetra(methylene phosphonic acid) | 0.2 |
| Sodium chloride | 0.063 | Tap water | 2.556 |
| Total | 7.206 | Total | 5.996 |

Example 7. A two-part kit was made according to the following recipe.

| Two-Part Kit 7 | | | |
|---|---|---|---|
| Part A | Weight (g) | Part B | Weight (g) |
| Oxone® | 5.0 | Barquat® DM50 | 0.94 |
| Malic acid | 0.94 | Ammonyx® LO | 1.2 |
| Sodium sulphate | 0.503 | Rovol® T500 | 0.3 |
| Taurine | 0.7 | Ethylene diamine tetra(methylene phosphonic acid) | 0.2 |
| Sodium chloride | 0.063 | Tap water | 3.36 |
| Total | 7.206 | Total | 6.0 |

### Disinfectant preparations.

Preparations were made from each of the Two-Part Kits 1-7 at about 20°C according to the same general procedure as follows. One liter (1 L) of tap water was poured into a glass beaker, Part B was added, followed by Part A. The mixture was well stirred for 2 minutes and its appearance was visually assessed after 30 minutes and 1 hour. The appearance at 1 hour is summarized below and is the same as the 30 minute assessment.

| Disinfectant Preparation | Appearance at 1 Hour |
|---|---|
| Two-Part Kit 1 | Hazy/translucent |
| Two-Part Kit 2 | Clear |
| Two-Part Kit 3 | Clear |
| Two-Part Kit 4 | Opaque |
| Two-Part Kit 5 | Clear |
| Two-Part Kit 6 | Hazy/translucent |
| Two-Part Kit 7 | Opaque |

Even after one hour, none of the samples exhibited precipitation or sedimentation.

### Disinfectant preparation stability tests.

The Disinfectant Preparations 1 and 7 were tested for their stability over a 48 hour period using the Available Oxygen Assay Method as follows. Fifty (50.0) mL of disinfectant preparation solution was accurately pipetted into a 250 mL conical flask; to this solution was added 10 mL of 10% acetic acid and 1.0 g of potassium iodide; the solution was then titrated with 0.1M sodium thiosulphate solution (Na₂S₂O₃ titre) until the test solution returned to its original color. The titration was conducted three times and the mean average result recorded as mL of Na₂S₂O₃ titre. The percent weight per volume (% w/v) of active oxygen is calculated from the Na₂S₂O₃ titre according to following formula: % w/v Active Oxygen = (0.08 x Titre)/sample volume.

The disinfectant preparations for this test were made as previously described by mixing the two-part kits with 1 litre of tap water at ambient temperature (recording the temperature) and mechanically stirring for 30 minutes, prior to initial assay. A 10 second manual stir was carried out for subsequent assays at 24 and 48 hours.

Stability results for Disinfectant Preparation 1 are summarized as follows.

| Disinfectant Preparation 1 | | | | |
|---|---|---|---|---|
| Time | Solution Temp.(°C) | pH | Avg. Na₂S₂O₃ titre (mL) | % w/v Active Oxygen |
| 0 hr | 20.0 | 2.61 | 13.69 | 0.022 |
| 24 hr | 20.3 | 2.58 | 13.21 | 0.021 |
| 48 hr | 21.6 | 2.44 | 12.33 | 0.020 |

Stability results for Disinfectant Preparation 7 are summarized as follows.

| Disinfectant Preparation 7 | | | | |
|---|---|---|---|---|
| Time | Solution Temp.(°C) | pH | Avg. Na₂S₂O₃ titre (mL) | % w/v Active Oxygen |
| 0 hr | 19.5 | 2.68 | 13.82 | 0.022 |
| 24 hr | 20.5 | 2.62 | 13.46 | 0.022 |
| 48 hr | 21.8 | 2.55 | 13.34 | 0.021 |

The Disinfectant Preparation 3 was tested for its stability over a 48 hour period using the Hydrogen Peroxide Assay Method as follows. Twenty (20) mL of Disinfectant Preparation solution was accurately pipetted into a 250 mL conical flask containing 50 mL of distilled water, 3 mL of 20% sulphuric acid and 2 drops of ferroin indicator solution; this was then titrated with 0.1M cerium (IV) sulphate solution until the first blue end point. The titration was conducted three times and mean average result recorded as mL of cerium (IV) titre. The percent weight per volume (% w/v) of active oxygen is calculated from the Avg. Ce(IV) titre according to following formula: % w/v Active Oxygen = (0.08 x titre)/sample volume.

The disinfectant preparation for this test was made as previously described by mixing the two-part kits with 1 litre of tap water at ambient temperature (recording the temperature) and mechanically stirring for 30 minutes, prior to initial assay. A 10 second manual stir was carried out for subsequent assays at 24 and 48 hours.

Stability results for Disinfectant Preparation 3 are summarized as follows.

| Disinfectant Preparation 3 | | | | |
|---|---|---|---|---|
| Time | Solution Temp.(°C) | pH | Avg. Ce(IV) titre (mL) | Active Oxygen % w/v |
| 0 hr | 20.0 | 7.75 | 8.47 | 0.034 |
| 24 hr | 19.7 | 8.04 | 8.39 | 0.034 |
| 48 hr | 20.4 | 8.21 | 8.33 | 0.033 |

The active oxygen content is a measure of the biocidal activity. The active oxygen content of disinfectant preparations 1, 3 and 7 indicates only a slight loss of the activity level over the period tested and represents an acceptable level of stability. Many commercial, farm-based disinfectant solutions designed for use on hard surfaces are normally expected to remain viable for a full working day, typically 8-12 hours.

## Claims

1. A multi-part kit system comprising:
(i) a solid part A which comprises 10 to 80 wt.% of at least one peroxy compound selected from the group consisting of KHSO₅, K₂S₂O₈, Na₂S₂O₈, magnesium monoperoxyphthalate hexahydrate, sodium percarbonate and sodium perborate; 0.1 to 10 wt.% of at least one MCI compound wherein M is selected from the group consisting of lithium, sodium and potassium; and 1 to 20 wt.% of at least one H₂N(CH₂)ₙSO₃H compound with n=0,1, 2 or 3 with the proviso that the amount of taurine H₂N(CH₂)₂SO₃H is 1 to 20wt%, wherein the wt. % of part A ingredients is based on the total weight of solid part A; and,
(ii) a liquid part B in the form of an aqueous solution which comprises 0 to 20 wt.% of nonionic surfactant; 3.6 to 20 wt.% of amphoteric surfactant; and 0.5 to 20 wt.% of at least one compound comprising substituted ammonium selected from the group consisting of dihydrocarbyl dimethylammonium halides, didecyl methyl-poly(oxyethyl) ammonium propionate, chlorhexidine gluconate, cetylpyridinium halide and polyhexamethylene biguanide hydrochloride, wherein at least one of the two hydrocarbyl residues comprises 8 to 18 carbon atoms, wherein halide means chloride or bromide, and wherein the wt. % of part B ingredients is based on the total weight of liquid part B.

2. The multi-part kit system of claim 1 consisting of the solid part A and the liquid part B.

3. The multi-part kit system of claim 1 or 2, wherein the solid part A is a flowable powder or takes the form of pellets or tablets.

4. The multi-part kit system of claim 1, 2 or 3, wherein the solid part A comprises KHSO₅.

5. The multi-part kit system of claim 4, wherein the solid part A comprises no other peroxy compound than KHSO₅.

6. The multi-part kit system of claim 5, wherein the KHSO₅ is present in the form of the triple salt 2KHSO₅·KHSO₄·K₂SO₄, wherein the proportion of said triple salt is 20 to 98.9 wt.%, based on total solid part A composition.

7. The multi-part kit system of any one of claims 1 to 5, wherein the solid part A comprises
36 to 87 wt.% of the triple salt 2KHSO₅·KHSO₄·K₂SO₄;
0.2 to 2.6 wt.% of NaCl;
3 to 20 wt.% of H₂N(CH₂)₂SO₃H; and
5 to 50 wt.% of one or more further additives selected from the group consisting of solid water-soluble inorganic fillers, solid pH-modifiers, dyes and peroxide decomposition stabilizers;
wherein the sum of the wt.% totals 100 wt.%.

8. The multi-part kit system of any one of the preceding claims, wherein the liquid part B comprises 25 to 95.9 wt.% of water.

9. The multi-part kit system of any one of the preceding claims, wherein the liquid part B comprises one or more dihydrocarbyl dimethylammonium chlorides selected from the group consisting of didecyldimethylammonium chloride and benzalkonium chlorides of the formula C₆H₅CH₂(CH₃)₂(CₙH₂ₙ₊₁)N⁺Cl⁻ with n = 8, 10, 12, 14, 16 or 18.

10. The multi-part kit system of claim 9, wherein the liquid part B comprises none of the following compounds: didecyl methyl-poly(oxyethyl) ammonium propionate, chlorhexidine gluconate, cetylpyridinium chloride, cetylpyridinium bromide and polyhexamethylene biguanide hydrochloride.

11. The multi-part kit system of any one of claims 1 to 7, wherein the liquid part B comprises
57 to 84 wt.% of water;
1 to 14 wt.% of nonionic surfactant;
6 to 20 wt.% of amphoteric surfactant;
2 to 18 wt.% of at least one compound selected from the group consisting of didecyldimethylammonium chloride and benzalkonium chlorides of the formula C₆H₅CH₂(CH₃)₂(CₙH₂ₙ₊₁)N⁺Cl⁻ with n = 8, 10, 12, 14, 16 or 18; and
1 to 6 wt.% of one or more further additives selected from the group consisting of MCI compounds; hard water sequestrants; corrosion inhibitors; water-soluble solvents and peroxide decomposition stabilizers;
wherein the sum of the wt.% totals 100 wt.%.

12. The multi-part kit system of any one of claims 1 to 4, wherein the solid part A comprises
36 to 87 wt.% of the triple salt 2KHSO₅·KHSO₄·K₂SO₄;
0.2 to 2.6 wt.% of NaCl;
3 to 20 wt.% of H₂N(CH₂)₂SO₃H; and
5 to 50 wt.% of one or more further additives selected from the group consisting of solid water-soluble inorganic fillers, solid pH-modifiers, dyes and peroxide decomposition stabilizers; and
wherein the liquid part B comprises
57 to 84 wt.% of water;
1 to 14 wt.% of nonionic surfactant;
6 to 20 wt.% of amphoteric surfactant;
2 to 18 wt.% of at least one compound selected from the group consisting of didecyldimethylammonium chloride and benzalkonium chlorides of the formula C₆H₅CH₂(CH₃)₂(CₙH₂ₙ₊₁)N⁺Cl⁻ with n = 8, 10, 12, 14, 16 or 18; and
1 to 6 wt.% of one or more further additives selected from the group consisting of MCI compounds, hard water sequestrants, corrosion inhibitors; water-soluble solvents and peroxide decomposition stabilizers;
wherein the sum of the wt.% of all ingredients in part A totals 100 wt.% and the sum of the wt.% of all ingredients in part B totals 100 wt.%.

13. The multi-part kit system of any one of the preceding claims wherein the parts A and B are such that upon mixing with each other (and water) the weight ratio between the at least one peroxy compound and the at least one compound comprising substituted ammonium is 4 : 1 to 23 : 1.

## Patentansprüche

1. Mehrteiliges Kit-System, umfassend:
(i) einen festen Teil A, der 10 bis 80 Gewichtsprozent von wenigstens einer Peroxyverbindung, die aus der Gruppe ausgewählt ist, die aus KHSO₅, K₂S₂O₈, Na₂S₂O₈, Magnesiummonoperoxyphthalat-Hexahydrat, Natriumpercarbonat und Natriumperborat besteht; 0,1 bis 10 Gewichtsprozent von wenigstens einer MCl-Verbindung, wobei M aus der Gruppe ausgewählt ist, die aus Lithium, Natrium und Kalium besteht; und 1 bis 20 Gewichtsprozent von wenigstens einer H₂N(CH₂)ₙSO₃H-Verbindung mit n = 0, 1, 2 oder 3 umfasst, mit der Maßgabe, dass die Menge an Taurin, H₂N(CH₂)₂SO₃H, 1 bis 20 Gewichtsprozent beträgt, wobei der Gewichtsprozentanteil der Teil-A-Inhaltsstoffe auf das Gesamtgewicht des festen Teils A bezogen ist; und,
(ii) einen flüssigen Teil B in Form einer wässrigen Lösung, die 0 bis 20 Gewichtsprozent eines nichtionischen Tensids; 3,6 bis 20 Gewichtsprozent eines amphoteren Tensids; und 0,5 bis 20 Gewichtsprozent von wenigstens einer Verbindung umfasst, die ein substituiertes Ammonium umfasst, das aus der Gruppe ausgewählt ist, die aus Dihydrocarbyldimethylammoniumhaliden, Didecylmethylpoly(oxyethyl)ammoniumpropionat, Chlorhexidingluconat, Cetylpyridiniumhalid und Polyhexamethylenbiguanidhydrochlorid besteht, wobei wenigstens einer der beiden Hydrocarbylreste 8 bis 18 Kohlenstoffatome umfasst, wobei Halid Chlorid oder Bromid bedeutet, und wobei der Gewichtsprozentanteil der Teil-B-Inhaltsstoffe auf das Gesamtgewicht des flüssigen Teils B bezogen ist.

2. Mehrteiliges Kit-System nach Anspruch 1, das aus dem festen Teil A und dem flüssigen Teil B besteht.

3. Mehrteiliges Kit-System nach Anspruch 1 oder 2, wobei der feste Teil A ein fließfähiges Pulver ist oder die Form von Pellets oder Tabletten hat.

4. Mehrteiliges Kit-System nach Anspruch 1, 2 oder 3, wobei der feste Teil A KHSO₅ umfasst.

5. Mehrteiliges Kit-System nach Anspruch 4, wobei der feste Teil A keine andere Peroxyverbindung als KHSO₅ umfasst.

6. Mehrteiliges Kit-System nach Anspruch 5, wobei das KHSO₅ in Form des Dreifachsalzes 2KHSO₅·KHSO₄·K₂SO₄ vorliegt, wobei der Anteil des Dreifachsalzes 20 bis 98,9 Gewichtsprozent bezogen auf die gesamte Teil-A-Zusammensetzung beträgt.

7. Mehrteiliges Kit-System nach einem der Ansprüche 1 bis 5, wobei der feste Teil A umfasst:
36 bis 87 Gewichtsprozent des Dreifachsalzes 2KHSO₅·KHSO₄·K₂SO₄;
0,2 bis 2,6 Gewichtsprozent NaCl;
3 bis 20 Gewichtsprozent H₂N(CH₂)₂SO₃H; und
5 bis 50 Gewichtsprozent von einem oder mehreren weiteren Zusatzstoffen, die aus der Gruppe ausgewählt sind, die aus festen wasserlöslichen anorganischen Füllstoffen, festen pH-Modifikationsmitteln, Farbstoffen und Peroxyzerfall-Stabilisatoren besteht;
wobei sich die Summe der Gewichtsprozentanteile auf 100 Gewichtsprozent beläuft.

8. Mehrteiliges Kit-System nach einem der vorhergehenden Ansprüche, wobei der flüssige Teil B 25 bis 95,9 Gewichtsprozent Wasser umfasst.

9. Mehrteiliges Kit-System nach einem der vorhergehenden Ansprüche, wobei der flüssige Teil B ein oder mehrere Dihydrocarbyldimethylammoniumchloride, ausgewählt aus der Gruppe bestehend aus Didecyldimethylammoniumchlorid und Benzalkoniumchloriden der Formel C₆H₅CH₂(CH₃)₂(CₙH₂ₙ₊₁)N⁺CL⁻ mit n = 8, 10, 12, 14, 16 oder 18, umfasst.

10. Mehrteiliges Kit-System nach Anspruch 9, wobei der flüssige Teil B keine der folgenden Verbindungen umfasst: Didecylmethylpoly(oxyethyl)ammoniumpropionat, Chlorhexidingluconat, Cetylpyridiniumchlorid, Cetylpyridiniumbromid und Polyhexamethylenbiguanidhydrochlorid.

11. Mehrteiliges Kit-System nach einem der Ansprüche 1 bis 7, wobei der flüssige Teil B umfasst:
57 bis 84 Gewichtsprozent Wasser;
1 bis 14 Gewichtsprozent eines nichtionischen Tensids;
6 bis 20 Gewichtsprozent eines amphoteren Tensids;
2 bis 18 Gewichtsprozent von wenigstens einer Verbindung ausgewählt aus der Gruppe bestehend aus Didecyldimethylammoniumchlorid und Benzalkoniumchloriden der Formel C₆H₅CH₂(CH₃)₂(CₙH₂ₙ₊₁)N⁺CL⁻ mit n = 8, 10, 12, 14, 16 oder 18; und
1 bis 6 Gewichtsprozent von einem oder mehreren weiteren Zusatzstoffen, ausgewählt aus der Gruppe bestehend aus MCl-Verbindungen; Hartwasser-Sequestriermitteln; Korrosionshemmern; wasserlöslichen Lösungsmitteln und Peroxidzerfall-Stabilisatoren;
wobei sich die Summe der Gewichtsprozentanteile auf 100 Gewichtsprozent beläuft.

12. Mehrteiliges Kit-System nach einem der Ansprüche 1 bis 4, wobei der feste Teil A umfasst:
36 bis 87 Gewichtsprozent des Dreifachsalzes 2KHSO₅·KHSO₄·K₂SO₄;
0,2 bis 2,6 Gewichtsprozent NaCl;
3 bis 20 Gewichtsprozent H₂N(CH₂)₂SO₃H; und
5 bis 50 Gewichtsprozent von einem oder mehreren weiteren Zusatzstoffen, ausgewählt aus der Gruppe bestehend aus festen wasserlöslichen anorganischen Füllstoffen, festen pH-Modifikationsmitteln, Farbstoffen und Peroxidzerfall-Stabilisatoren; und
wobei der flüssige Teil B umfasst:
57 bis 84 Gewichtsprozent Wasser;
1 bis 14 Gewichtsprozent eines nichtionischen Tensids;
6 bis 20 Gewichtsprozent eines amphoteren Tensids;
2 bis 18 Gewichtsprozent von wenigstens einer Verbindung ausgewählt aus der Gruppe bestehend aus Didecyldimethylammoniumchlorid und Benzalkoniumchloriden der Formel C₆H₅CH₂(CH₃)₂(CₙH₂ₙ₊₁)N⁺CL⁻ mit n = 8, 10, 12, 14, 16 oder 18; und
1 bis 6 Gewichtsprozent von einem oder mehreren weiteren Zusatzstoffen, ausgewählt aus der Gruppe bestehend aus MCl-Verbindungen; Hartwasser-Sequestriermitteln; Korrosionshemmern; wasserlöslichen Lösungsmitteln und Peroxidzerfall-Stabilisatoren;
wobei sich die Summe der Gewichtsprozentanteile aller Inhaltsstoffe in Teil A auf 100 Gewichtsprozent beläuft und sich die Summe der Gewichtsprozentanteile aller Inhaltsstoffe in Teil B auf 100 Gewichtsprozent beläuft.

13. Mehrteiliges Kit-System nach einem der vorhergehenden Ansprüche, wobei die Teile A und B derart sind, dass, nachdem sie miteinander (und Wasser) vermischt wurden, das Gewichtsverhältnis zwischen der wenigstens einen Peroxyverbindung und der wenigstens einen substituiertes Ammonium umfassenden Verbindung 4 : 1 bis 23 : 1 beträgt.

## Revendications

1. Système d'ensemble multicomposant comprenant :
(i) une partie solide A qui comprend 10 à 80 % en poids d'au moins un composé peroxy choisi dans le groupe constitué des KHSO₅, K₂S₂O₈, Na₂S₂O₈, monoperoxyphtalate de magnésium hexahydraté, percarbonate de sodium et perborate de sodium ; 0,1 à 10 % en poids d'au moins un composé MCl dans lequel M est choisi dans le groupe constitué des lithium, sodium et potassium ; et 1 à 20 % en poids d'au moins un composé H₂N(CH₂)ₙSO₃H avec n= 0, 1, 2, 3, 4, 5 ou 3 à condition que la quantité de taurine H₂N(CH₂)₂SO₃H soit de 1 à 20 % en poids, dans lequel le % en poids des composants de partie A est sur la base du poids total de partie solide A ; et,
(ii) une partie liquide B sous la forme d'une solution aqueuse qui comprend 0 à 20 % en poids de tensioactif non ionique ; 3,6 à 20 % en poids de tensioactif amphotère ; et 0,5 à 20 % en poids d'au moins un composé comprenant un ammonium substitué choisi dans le groupe constitué des halogénures de dihydrocarbyldiméthylammonium, propionate de didécylméthyl-poly(oxyéthyl)ammonium, gluconate de chlorhexidine, halogénure de cétylpyridinium et chlorhydrate de polyhexaméthylène-biguanide, dans lequel au moins un des deux résidus hydrocarbyle comprend 8 à 18 atomes de carbone, dans lequel halogénure signifie chlorure ou bromure, et dans lequel le % en poids des composants de la partie B est sur la base du poids total de partie liquide B.

2. Système d'ensemble multicomposant selon la revendication 1 constitué de la partie solide A et de la partie liquide B.

3. Système d'ensemble multicomposant selon la revendication 1 ou 2, dans lequel la partie solide A est une poudre fluide ou prend la forme de granules ou de comprimés.

4. Système d'ensemble multicomposant selon la revendication 1, 2 ou 3, dans lequel la partie solide A comprend KHSO₅.

5. Système d'ensemble multicomposant selon la revendication 4, dans lequel la partie solide A ne comprend aucun composé peroxy autre que KHSO₅.

6. Système d'ensemble multicomposant selon la revendication 5, dans lequel le KHSO₅ est présent sous la forme du triple sel 2KHSO₅.KHSO₄.K₂SO₄, dans lequel la proportion dudit triple sel est 20 à 98,9 % en poids, sur la base de la composition de partie solide A totale.

7. Système d'ensemble multicomposant selon l'une quelconque des revendications 1 à 5, dans lequel la partie solide A comprend
36 à 87 % en poids du triple sel 2KHSO₅.KHSO₄.K₂SO₄ ;
0,2 à 2,6 % en poids de NaCl ;
3 à 20 % en poids de H₂N(CH₂)₂SO₃H ; et
5 à 50 % en poids d'un ou plusieurs additifs supplémentaires choisis dans le groupe constitué de charges inorganiques hydrosolubles solides, modificateurs de pH solides, colorants et stabilisants de décomposition de peroxyde ;
dans lequel la somme totale des % en poids est de 100 % en poids.

8. Système d'ensemble multicomposant selon l'une quelconque des revendications précédentes, dans lequel la partie liquide B comprend 25 à 95,9 % en poids d'eau.

9. Système d'ensemble multicomposant selon l'une quelconque des revendications précédentes, dans lequel la partie liquide B comprend un ou plusieurs chlorures de dihydrocarbyldiméthylammonium choisis dans le groupe constitué du chlorure de didécyldiméthylammonium et de chlorures de benzalkonium de formule C₆H₅CH₂(CH₃)₂(CₙH₂ₙ₊₁)N⁺Cl⁻ avec n = 8, 10, 12, 14, 16 ou 18.

10. Système d'ensemble multicomposant selon la revendication 9, dans lequel la partie liquide B ne comprend aucun des composés suivants : propionate de didécylméthyl-poly(oxyéthyl)ammonium, gluconate de chlorhexidine, chlorure de cétylpyridinium, bromure de cétylpyridinium et chlorhydrate de polyhexaméthylène-biguanide.

11. Système d'ensemble multicomposant selon l'une quelconque des revendications 1 à 7, dans lequel la partie liquide B comprend
57 à 84 % en poids d'eau ;
1 à 14 % en poids de tensioactif non ionique ;
6 à 20 % en poids de tensioactif amphotère ;
2 à 18 % en poids d'au moins un composé choisi dans le groupe constitué de chlorure de didécyldiméthylammonium et de chlorures de benzalkonium de formule C₆H₅CH₂(CH₃)₂(CₙH₂ₙ₊₁)N⁺Cl⁻ avec n = 8, 10, 12, 14, 16 ou 18 ; et
1 à 6 % en poids d'un ou plusieurs additifs supplémentaires choisis dans le groupe constitué de composés MCl ; séquestrants d'eau dure ; inhibiteurs de corrosion ; solvants hydrosolubles et stabilisants de décomposition de peroxyde ;
dans lequel la somme totale des % en poids est de 100 % en poids.

12. Système d'ensemble multicomposant selon l'une quelconque des revendications 1 à 4, dans lequel la partie solide A comprend
36 à 87 % en poids du triple sel 2KHSO₅.KHSO₄.K₂SO₄ ;
0,2 à 2,6 % en poids de NaCl ;
3 à 20 % en poids de H₂N(CH₂)₂SO₃H ; et
5 à 50 % en poids d'un ou plusieurs additifs supplémentaires choisis dans le groupe constitué de charges inorganiques hydrosolubles solides, modificateurs de pH solides, colorants et stabilisants de décomposition de peroxyde ; et
dans lequel la partie liquide B comprend
57 à 84 % en poids d'eau ;
1 à 14 % en poids de tensioactif non ionique ;
6 à 20 % en poids de tensioactif amphotère ;
2 à 18 % en poids d'au moins un composé choisi dans le groupe constitué de chlorure de didécyldiméthylammonium et de chlorures de benzalkonium de formule C₆H₅CH₂(CH₃)₂(CₙH₂ₙ₊₁)N⁺Cl⁻ avec n = 8, 10, 12, 14, 16 ou 18 ; et
1 à 6 % en poids d'un ou plusieurs additifs supplémentaires choisis dans le groupe constitué de composés MCl, séquestrants d'eau dure, inhibiteurs de corrosion ; solvants hydrosolubles et stabilisants de décomposition de peroxyde ;
dans lequel la somme totale des % en poids de tous les composants dans la partie A est de 100 % en poids et la somme totale des % en poids de tous les composants dans la partie B est de 100 % en poids.

13. Système d'ensemble multicomposant selon l'une quelconque des revendications précédentes, dans lequel les parties A et B sont telles que, après mélange de l'une avec l'autre (et avec de l'eau), le rapport en poids entre l'au moins un composé peroxy et l'au moins un composé comprenant ammonium substitué est de 4:1 à 23:1.
